# FASCICULE DE BREVET EUROPEEN

(11) **EP 2 875 428 B1**
(45) Date de publication et mention de la délivrance du brevet: **05.10.2016**
(21) Numéro de dépôt: 13739668.5
(22) Date de dépôt: 17.07.2013
(51) Int. Cl.: G06F 9/48, G06F 9/52

(54) **PROCEDE DE GESTION DES FILS D'EXECUTION DANS UNE UNITE INFORMATIQUE ET UNITE INFORMATIQUE AGENCEE POUR LA MISE EN OEUVRE DE CE PROCEDE**
VERFAHREN ZUR VERWALTUNG DER AUSFÜHRUNGSTHREADS IN EINER RECHNEREINHEIT UND RECHNEREINHEIT ZUR DURCHFÜHRUNG DIESES VERFAHRENS
METHOD FOR MANAGING THE THREADS OF EXECUTION IN A COMPUTER UNIT, AND COMPUTER UNIT CONFIGURED TO IMPLEMENT SAID METHOD

(30) Priorité: 20.07.2012 FR 1257078
(43) Date de publication de la demande: 27.05.2015
(73) Titulaire: Morpho, 92130 Issy-les-Moulineaux (FR)
(72) Inventeur: BRONSART, Sébastien, F-92130 Issy Les Moulineaux (FR); DARBOIS, Matthieu, F-92130 Issy Les Moulineaux (FR); THUILLIER, Cédric, F-92130 Issy Les Moulineaux (FR)
(74) Mandataire: Lavialle, Bruno François Stéphane
(86) Numéro de dépôt international: PCT/EP2013/065116
(87) Numéro de publication internationale: WO 2014/012983

(56) Documents cités:
- WO-A1-2009/058154
- US-B1- 6 604 160
- US-B1- 7 844 973

## Description

La présente invention concerne un procédé de gestion des fils d'exécution lancés par des processus informatiques au sein d'une unité informatique. L'invention a également pour objet une unité informatique pour la mise en oeuvre de ce procédé.

Une unité informatique, comme l'unité centrale d'un ordinateur personnel, d'un serveur ou d'une station de travail, comporte généralement au moins un coeur de calcul relié à une mémoire contenant un système d'exploitation (ou O.S. de l'anglais «Operating System ») et des applications.

L'exécution d'une instance d'une de ces applications se traduit par l'exécution d'un processus au sein de l'unité. Chaque processus peut engendrer l'exécution d'un ou plusieurs fils (« threads » en anglais), lesquels partagent la mémoire du processus parent. À des fins de simplification, on utilisera le terme « fil » pour décrire les portions de code exécutable de manière concurrente, qu'il s'agisse du code des processus, ou bien du code des fils créés par les processus.

Les unités informatiques les plus performantes comportent un nombre croissant de coeurs de calcul permettant d'exécuter des fils en parallèle. L'ordonnancement de différents fils pouvant tirer partie des performances de plusieurs coeurs et lançant des tâches qui ont des durées et des priorités différentes est relativement complexe, difficile à calculer et à intégrer dans le but d'optimiser à la fois le flux et le temps de réponse. Pour conserver une certaine maîtrise des durées d'exécution et de la gestion des priorités, il est généralement nécessaire dans ce cas de recourir à un programme d'ordonnancement dit temps réel. Ceci entraîne une perte de flexibilité dans le fonctionnement de l'unité informatique et est coûteux à développer.

Dans les domaines nécessitant de fortes puissances de calcul, comme par exemple dans le traitement des informations de bases de données de très grandes tailles, il est courant d'utiliser des systèmes informatiques regroupant plusieurs unités informatiques multicoeurs ayant chacune accès à une partie de la base de données. On comprend que, dans ces domaines, l'optimisation de la charge des coeurs de calcul au sein de chaque unité informatique permet de réduire le nombre d'unités informatiques du système informatique et donc le coût de ce dernier. Il s'agit donc là d'un objectif majeur.

Un but de l'invention est de fournir un moyen pour gérer des fils à exécuter par une unité informatique.

A cet effet, on prévoit, selon l'invention, un procédé de gestion de fils d'exécution lancés par des processus exécutés dans une unité informatique comportant au moins un coeur de calcul relié à une mémoire partagée, caractérisé en ce que le procédé comprend les étapes de :
- utiliser une zone de la mémoire partagée, accessible à tous les processus et fils d'exécution, afin d'assurer la gestion des jetons de calcul,
- lorsqu'un fil lié à une tâche veut s'exécuter, faire vérifier par ce fil qu'un jeton de calcul est disponible,
- si un jeton de calcul est disponible, faire s'attribuer le jeton de calcul par le fil en mettant à jour la mémoire partagée, poursuivre son exécution, puis libérer le jeton de calcul à la fin de son exécution,
- si aucun jeton n'est disponible, faire se placer le fil à exécuter en attente jusqu'à la libération d'un jeton de calcul par un fil ayant terminé son exécution,
- lorsqu'un jeton de calcul est libéré par un fil, faire identifier par ce même fil le prochain fil à qui transmettre ce jeton, et le lui transmettre le cas échéant,
- un indice de priorité étant attribué à chaque fil d'exécution, faire vérifier périodiquement, par chaque fil ayant une tâche en cours d'exécution, que n'a pas été mis en attente un fil avec un indice de priorité plus élevé que le sien et, le cas échéant, faire cesser l'exécution du fil en cours d'exécution et libérer le jeton de calcul correspondant.

Ainsi, l'ordonnancement des fils ne résulte pas de calculs mais de l'attribution de jetons de calcul aux fils demandant à s'exécuter et de la libération des jetons de calcul par les fils après exécution. Il s'agit d'un ordonnancement résultant de la coopération des processus et fils entre eux. Cet ordonnancement nécessite en outre peu de ressources et ne fait pas appel à l'ordonnanceur de l'O.S.

L'invention a également pour objet une unité informatique pour la mise en oeuvre de ce procédé.

D'autres caractéristiques et avantages de l'invention ressortiront à la lecture de la description qui suit d'un mode de réalisation particulier non limitatif de l'invention.

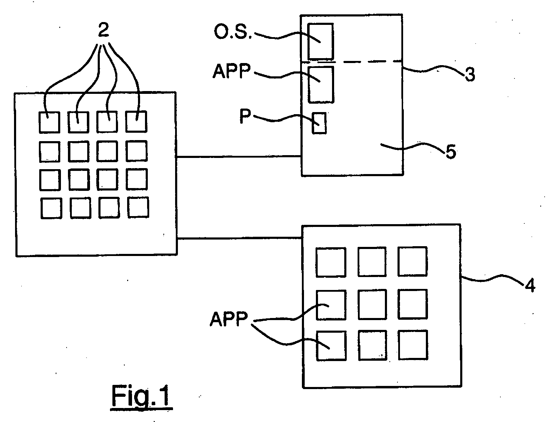

Il sera fait référence à la figure unique annexée qui est une vue schématique d'une unité informatique conforme à l'invention.

L'invention concerne donc un procédé de gestion de fils lancés par des processus exécutés dans une unité informatique et une unité informatique pour la mise en oeuvre de ce procédé.

En référence à la figure, l'unité informatique comporte, de façon connue en elle-même, un module de traitement de données 1 qui comprend des coeurs de calcul 2, ici au nombre de seize, et qui est relié à une mémoire vive 3 de type RAM et à une mémoire morte 4 contenant un programme de gestion O.S. et des programmes applicatifs APP. La mémoire vive 3 comprend au moins une zone partagée 5 accessible par tous les programmes applicatifs APP. Il va sans dire que l'unité informatique comprend d'autres composants comme un dispositif d'entrée/sortié, des interfaces homme/machine et autres qui ne sont ni décrits ni représentés car sans rapport direct avec l'invention.

Le fonctionnement de l'unité informatique est classique, à savoir que les programmes sont chargés en mémoire vive 3 pour pouvoir être exécutés par le module de traitement et plus précisément par les coeurs de calcul 2. Ces programmes consistent en un enchaînement de tâches qui sont exécutées sur un ou plusieurs fils. L'exécution des processus conduit donc au lancement successif et/ou simultané de fils qui vont être en concurrence pour être exécutés par les coeurs de calcul 2.

L'unité informatique est agencée pour mettre en oeuvre un procédé de gestion de ces fils.

Ce procédé débute par l'étape de charger dans la zone partagée 5 de la mémoire vive 4 une donnée P permettant la gestion d'un nombre de jetons de calcul qui est ici fonction du nombre prédéterminé de coeurs de calcul 2. Ce chargement est généralement effectué par le premier fil d'exécution faisant la demande d'un jeton de calcul. A cette fin, chaque processus est agencé pour vérifier la présence en mémoire vive de la donnée P de gestion des jetons de calcul et, dans la négative, pour charger en mémoire cette donnée.

Si aucun jeton de calcul n'est disponible, le fil d'exécution met à jour la donnée P afin d'indiquer son souhait de récupérer un jeton, puis se met en attente jusqu'à la libération d'un jeton de calcul par un autre fil ayant terminé son exécution. Si un jeton de calcul est disponible, le fil met à jour la donnée P pour indiquer qu'il s'attribue le jeton de calcul, et poursuit son exécution. A la fin de l'exécution du fil, ce dernier libère le jeton de calcul en mettant à jour la donnée P, et le cas échéant, en indiquant à un autre fil en attente qu'un jeton est disponible.

Il est prévu qu'un indice de priorité est attribué à chaque fil. Chaque fil est agencé pour vérifier périodiquement que n'a pas été mis en attente un autre fil avec un indice de priorité plus élevé que le sien et, le cas échéant, libère son jeton pour l'attribuer au fil de priorité plus élevée, puis se place en attente d'un nouveau jeton.

Avantageusement, chaque processus dont un fil est en cours d'exécution signale périodiquement qu'il est actif au travers de la donnée mémoire P qui tient à jour une liste des processus inscrits en cours d'exécution. L'un des processus inscrits libère le(s) jeton(s) de calcul d'un processus inscrit n'ayant pas signalé qu'il était actif au moment prévu. Ceci permet de libérer les jetons affectés à un processus dont le fonctionnement serait défaillant et qui aurait par exemple terminé son exécution prématurément, sans rendre ses jetons.

Avantageusement encore, dans un mode préférentiel de mise en oeuvre, le procédé comprend l'étape de prévoir une attribution d'un nombre limité de jetons de calcul à un processus ou groupe de processus. Ceci permet de s'assurer que le processus ou groupe de processus ne monopolisera pas un nombre trop important de coeurs de calcul et permettra à d'autres processus de pouvoir être exécutés sur les coeurs de calcul restant. Ceci est intéressant pour des processus non prioritaires gourmands en ressources.

Il est également possible de réserver au moins un jeton de calcul à au moins un processus. Ceci est particulièrement intéressant lorsque des processus critiques doivent pouvoir être exécutés à tout moment.

Ces restrictions d'attribution (limitation ou réservation) sont mémorisées dans la mémoire contenant la donnée P.

De préférence, le procédé de l'invention comporte l'étape d'autoriser un programme à accéder à la zone partagée 5. Le programme est par exemple un programme de collecte d'informations utilisables à des fins statistiques ou un programme de débogage.

Bien entendu, l'invention n'est pas limitée aux modes de réalisation décrits mais englobe toute variante entrant dans le champ de l'invention telle que définie par les revendications.

En particulier, le procédé de l'invention peut être mis en oeuvre d'une manière différente de celle décrite ici, c'est-à-dire sans les options et variantes mentionnées dans la description.

Le nombre de jetons de calcul peut être indépendant du nombre de coeurs de calcul 2 du système informatique.

## Revendications

1. Procédé de gestion de fils d'exécution lancés par des processus exécutés dans une unité informatique comportant au moins un coeur de calcul relié à une mémoire partagée, **caractérisé en ce que** le procédé comprend les étapes de :
- utiliser une zone de la mémoire partagée, accessible à tous les processus et fils d'exécution, afin d'assurer la gestion des jetons de calcul,
- lorsqu'un fil lié à une tâche veut s'exécuter, faire vérifier par ce fil qu'un jeton de calcul est disponible,
- si un jeton de calcul est disponible, faire s'attribuer le jeton de calcul par le fil en mettant à jour la mémoire partagée, poursuivre son exécution, puis libérer le jeton de calcul à la fin de son exécution,
- si aucun jeton n'est disponible, faire se placer le fil à exécuter en attente jusqu'à la libération d'un jeton de calcul par un fil ayant terminé son exécution,
- lorsqu'un jeton de calcul est libéré par un fil, faire identifier par ce même fil le prochain fil à qui transmettre ce jeton, et le lui transmettre le cas échéant,
- un indice de priorité étant attribué à chaque fil d'exécution, faire vérifier périodiquement, par chaque fil ayant une tâche en cours d'exécution, que n'a pas été mis en attente un fil avec un indice de priorité plus élevé que le sien et, le cas échéant, faire cesser l'exécution du fil en cours d'exécution et libérer le jeton de calcul correspondant.

2. Procédé selon la revendication 1, dans lequel chaque processus ayant un fil en cours d'exécution signale périodiquement qu'il est actif au travers de la zone de mémoire partagée qui tient à jour une liste des processus ayant un fil en cours d'exécution, et l'un de ces processus libère le jeton de calcul d'un processus inscrit n'ayant pas signalé qu'il était actif.

3. Procédé selon la revendication 1, dans lequel chaque processus est susceptible de charger en mémoire la donnée permettant la gestion des jetons de calcul et la donnée de gestion des jetons de calcul est chargée en mémoire par le premier processus souhaitant s'exécuter dans le cadre d'une session et déchargé à la fin de l'exécution du dernier processus en cours d'exécution.

4. Procédé selon la revendication 1, comprenant l'étape de prévoir une attribution d'un nombre limité de jetons de calcul à un au moins un processus.

5. Procédé selon la revendication 1, comprenant l'étape de réserver au moins un jeton de calcul à au moins un processus.

6. Procédé selon la revendication 1, comportant l'étape d'autoriser un programme à accéder à la zone partagée.

7. Procédé selon la revendication 6, dans lequel le programme est un programme de collecte d'informations utilisables à des fins statistiques.

8. Procédé selon la revendication 6, dans lequel le programme est un programme de débogage.

9. Unité informatique comportant au moins un coeur de calcul relié à une mémoire et agencé pour exécuter des processus, **caractérisé en ce que** l'unité informatique est agencée pour la mise en oeuvre du procédé conforme à l'une quelconque des revendications précédentes.

## Patentansprüche

1. Verfahren zur Steuerung von Ausführungsthreads, die von Prozessen gestartet werden, die in einer Recheneinheit ausgeführt werden, die mindestens einen Rechenkern umfasst, der mit einem geteilten Speicher verbunden ist, **dadurch gekennzeichnet, dass** das Verfahren die Schritte umfasst:
- Nutzen einer Zone des geteilten Speichers, die allen Prozessen und Ausführungsthreads zugänglich ist, um die Steuerung von Rechentoken sicherzustellen,
- wenn sich ein mit einer Aufgabe verbundener Thread ausführen will, Veranlassen, dass dieser Thread verifiziert, ob ein Rechentoken verfügbar ist,
- wenn ein Rechentoken verfügbar ist, Veranlassen, dass sich der Thread den Rechentoken durch Aktualisierung des geteilten Speichers zuordnet, dass er seine Ausführung fortsetzt und danach den Rechentoken am Ende seiner Ausführung freigibt,
- wenn kein Token verfügbar ist, Veranlassen, dass der auszuführende Thread bis zur Freigabe eines Rechentokens durch einen Thread, der seine Ausführung beendet hat, in eine Wartestellung versetzt wird,
- wenn ein Rechentoken von einem Thread freigegeben wird, Veranlassen, dass derselbe Thread den nächsten Thread identifiziert, zu dem der Token übertragen werden soll, und gegebenenfalls Übertragen des Tokens dorthin,
- wenn jedem Ausführungsthread ein Prioritätsindex zugeordnet ist, Veranlassen, dass jeder Thread, der eine in Ausführung befindliche Aufgabe hat, periodisch verifiziert, dass kein Thread mit einem Prioritätsindex, der höher als der seinige ist, in eine Wartestellung versetzt wurde, und gegebenenfalls Veranlassen, dass die Ausführung des in Ausführung befindlichen Threads beendet und der entsprechende Rechentoken freigegeben wird.

2. Verfahren nach Anspruch 1, wobei jeder Prozess, der einen in Ausführung befindlichen Thread hat, periodisch durch die geteilte Speicherzone signalisiert, dass er aktiv ist, wobei die geteilte Speicherzone eine Liste von Prozessen, die einen in Ausführung befindlichen Thread haben, aktuell hält, und einer dieser Prozesse den Rechentoken eines eingetragenen Prozesses freigibt, der nicht signalisiert hat, dass er aktiv ist.

3. Verfahren nach Anspruch 1, wobei jeder Prozess in der Lage ist, in den Speicher das Datenelement zu laden, das die Steuerung der Rechentoken ermöglicht, und das Datenelement zum Steuern der Rechentoken in den Speicher durch den ersten Prozess geladen wird, der sich im Rahmen einer Sitzung ausführen möchte, und am Ende der Ausführung des letzten in Ausführung befindlichen Prozesses entladen wird.

4. Verfahren nach Anspruch 1, umfassend den Schritt des Vorsehens einer Zuordnung einer begrenzten Anzahl von Rechentoken zu mindestens einem Prozess.

5. Verfahren nach Anspruch 1, umfassend den Schritt des Reservierens mindestens eines Rechentokens für mindestens einen Prozess.

6. Verfahren nach Anspruch 1, umfassend den Schritt des Autorisierens eines Programms zum Zugriff auf die geteilte Zone.

7. Verfahren nach Anspruch 6, wobei das Programm ein Programm zum Sammeln von Informationen ist, die zu statistischen Zwecken nutzbar sind.

8. Verfahren nach Anspruch 6, wobei das Programm ein Fehlerbeseitigungsprogramm ist.

9. Recheneinheit, umfassend mindestens einen Rechenkern, der mit einem Speicher verbunden und so ausgebildet ist, dass er Prozesse ausführt, **dadurch gekennzeichnet, dass** die Recheneinheit so ausgebildet ist, dass sie das Verfahren nach einem der vorhergehenden Ansprüche durchführt.

## Claims

1. A method of managing execution threads launched by processes being executed in a computer unit having at least one calculation core connected to a shared memory, the method being **characterized in that** it comprises the steps of:
· using a zone of the shared memory that is accessible to all of the processes and execution threads for the purpose of managing calculation tokens;
· when a thread associated with a task seeks to execute, causing the thread to verify whether a calculation token is available;
· if a calculation token is available, causing the thread to allocate itself the calculation token by updating the shared memory, followed by the thread executing, and then by the thread releasing the calculation token at the end of its execution;
· if no token is available, causing the thread for execution to go on standby until a calculation token is released by a thread that has terminated its execution;
· when a calculation token is released by a thread, causing that thread to identify the next thread to which the token is to be transferred, and to transfer the token thereto, where appropriate; and
· each execution thread has a priority index allocated thereto, and each thread having a task that is being executed is caused periodically to verify that a thread has not been put on standby that has a priority index higher than its own, and where appropriate, causing the thread that is executing to stop executing and release the corresponding calculation token.

2. A method according to claim 1, wherein each process having a thread that is executing periodically indicates that it is active by means of the shared memory zone which maintains an up-to-date list of processes having a thread that is being executed, and one of these processes releases the calculation token of a registered process that has failed to signal that it is active.

3. A method according to claim 1, wherein each process is capable of loading into memory the data entity enabling calculation tokens to be managed and the calculation token data entity is loaded into memory by the first process seeking to execute in the context of a session and is unloaded at the end of execution of the last process to be executing.

4. A method according to claim 1, including a step of providing an allocation of a limited number calculation tokens to at least one process.

5. A method according to claim 1, including a step of reserving at least one calculation token for at least one process.

6. A method according to claim 1, including a step of authorizing a program to access the shared zone.

7. A method according to claim 6, wherein the program is a program for collecting information suitable for use for statistical purposes.

8. A method according to claim 6, wherein the program is a debugging program.

9. A computer unit including at least one calculation core connected to a memory and arranged to execute processes, the computer unit being **characterized in that** it is arranged to perform the method according to any preceding claim.
